# EUROPÄISCHE PATENTANMELDUNG

(11) **EP 1 947 399 A2**
(43) Veröffentlichungstag der Anmeldung: **23.07.2008**
(21) Anmeldenummer: 07024888.5
(22) Anmeldetag: 21.12.2007
(51) Int. Cl.: F24F 5/00, F24D 3/16

(54) **Vorrichtung zum Klimatisieren von Räumen und Gebäuden**

(30) Priorität: 04.01.2007 DE 102007001602
(71) Anmelder: Kälberer, Stefan, 73344 Gruibingen (DE)
(72) Erfinder: Kälberer, Stefan, 73344 Gruibingen (DE)
(74) Vertreter: Jackisch-Kohl, Anna-Katharina

(57) **Zusammenfassung**

Zum Erwärmen und zum Kühlen von Räumen und Gebäuden werden Klimaelemente eingesetzt. Sie haben einen Isolierkörper (1), der eine Leitung für ein Wärmeträgermedium und ein Wärmeleitelement (4) aufweist. An ihm liegt eine Raumfläche (20) an, auf die die Wärme/Kälte übertragen wird. Damit eine optimale Wärme/Kälteübertragung überreicht wird, ist der Isolierkörper (1) des Klimaelementes gegen die Raumfläche (20) vorgespannt. Aufgrund der Vorspannung muss der Isolierkörper (1) mit dem Wärmeleitelement (4) nicht mit engen Toleranzen gefertigt werden. Die Vorspannung sorgt dafür, dass der Isolierkörper (1) und damit das Wärmeleitelement (4) auch bei größeren Fertigungstoleranzen zuverlässig an der Raumfläche (20) anliegt. Die Vorrichtung wird zum Erwärmen und/oder zum Kühlen von Räumen, vorzugsweise von Wohn- oder Büroräumen, eingesetzt.

## Beschreibung

Die Erfindung betrifft eine Vorrichtung zum Klimatisieren von Räumen und Gebäuden nach dem Oberbegriff des Anspruches 1.

Es ist bekannt, zum Erwärmen und zum Kühlen von Räumen und Gebäuden Klimaelemente einzusetzen, bei denen ein Wärmeträgermedium durch eine Leitung strömt. An ihr liegt das Wärmeleitelement an, das die Wärme auf die Raumfläche überträgt.

Der Erfindung liegt die Aufgabe zugrunde, die gattungsgemäße Vorrichtung so auszubilden, daß eine optimale Wärme/Kälteübertragung erreicht wird.

Diese Aufgabe wird bei der gattungsgemäßen Vorrichtung erfindungsgemäß mit den kennzeichnenden Merkmalen des Anspruches 1 gelöst.

Bei der erfindungsgemäßen Vorrichtung wird durch die Vorspannung des Isolierkörpers sichergestellt, daß das an ihm vorgesehene Wärmeleitelement flächig gegen die Raumfläche gedrückt wird. Dadurch ist ein optimaler Wärme/Kälteübergang vom Wärmeleitelement zur Raumfläche sichergestellt. Da der Isolierkörper in der Einbaulage gegen die Raumfläche vorgespannt ist, läßt sich die Vorrichtung auch einfach und kostengünstig herstellen und montieren. Aufgrund der Vorspannung muß der Isolierkörper mit dem Wärmeleitelement nicht in engen Toleranzen gefertigt werden. Die Vorspannung sorgt dafür, daß der Isolierkörper und damit das Wärmeleitelement auch bei größeren Fertigungstoleranzen zuverlässig gegen die Raumfläche gedrückt werden.

Bei einer Ausbildung entsprechend Anspruch 7 erfüllt die Vorrichtung bzw. das Klimaelement nicht nur eine Wärme/Kälteübertragungsfunktikon, sondern auch eine akustische Absorberfunktion aufgrund der Schalldurchtrittsöffnungen. Hierzu kann das Wärmeleitelement vorteilhaft durch ein Lochblech gebildet sein, das eine entsprechend große Zahl von Schalldurchtrittsöffnungen aufweist. Eine solche Ausbildung ist besonders dann von Vorteil, wenn das Wärmeleitelement die Formstabilität des Klimaelementes gewährleisten soll. Dann ist eine zusätzliche Abstützung des Klimaelementes nicht erforderlich. Insbesondere kann dann ein Isolierkern des Isolierkörpers aus einem weniger formbeständigen Material bestehen.

Die akustische Absorberfunktion kann auch dadurch erreicht werden, daß mehrere Wärmeleitelemente mit Abstand neben- und/oder hintereinander angeordnet werden. Dann bilden die Spalte zwischen den Wärmeleitelementen die Schalldurchtrittsöffnungen. Bei einer solchen Ausbildung der Vorrichtung ist es allerdings notwendig, daß entweder der Isolierkern des Isolierkörpers eine hohe Formstabilität aufweist, oder daß der Isolierkörper mit zusätzlichen Versteifungselementen versehen wird.

Bei einer Ausbildung nach Anspruch 12 werden mehrere Klimaelemente zu einer vorkonfektionierten Baueinheit zusammengefaßt. Dies ist besonders vorteilhaft bei der Herstellung im Bereich des Fertighauses. Dann kann diese Baueinheit bereits im Werk vormontiert und insbesondere ohne zusätzliche Verrohrung montiert werden. Auf der Baustelle muß dann lediglich die vormontierte, mit den Leitungen versehene Baueinheit in der gewünschten Weise montiert werden, wobei nur noch die beiden Enden der miteinander leitungsverbundenen Rohre an die entsprechenden hausseitigen Anschlüsse angeschlossen werden müssen. Dadurch ist eine sehr einfache, schnelle und vor allen Dingen kostengünstige Montage möglich.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: im Schnitt einen Isolierkörper eines Klimaelementes einer erfindungsgemäßen Vorrichtung,
- Fig. 2: im Schnitt einen Befestigungssatz des erfindungsgemäßen Klimaelementes,
- Fig. 3: im Schnitt den in den Befestigungssatz eingehängten Isolierkörper,
- Fig. 4: die zwischen zwei vertikalen Ständern montierte erfindungsgemäße Vorrichtung,
- Fig. 5: in einer Darstellung entsprechend Fig. 4 eine zweite Ausführungsform einer erfindungsgemäßen Vorrichtung,
- Fig. 6: in einer Darstellung entsprechend Fig. 4 eine dritte Ausführungsform einer erfindungsgemäßen Vorrichtung,
- Fig. 7: in einer Darstellung entsprechend Fig. 4 eine weitere Ausführungsform einer erfindungsgemäßen Vorrichtung,
- Fig. 8: in perspektivischer Darstellung eine weitere Ausführungsform einer erfindungsgemäßen Vorrichtung, die aus einzelnen Klimaelementen zusammengesetzt ist,
- Fig. 9: eine weitere Ausführungsform einer erfindungsgemäßen Vorrichtung in Vorderansicht,
- Fig. 10: einen Querschnitt durch die Vorrichtung gemäß Fig. 9,
- Fig. 11: eine Draufsicht auf eine Wandbeplankung der Vorrichtung gemäß Fig. 9,
- Fig. 12 bis Fig. 14: in einer Darstellung entsprechend den Fig. 1, 2 und 4 eine weitere Ausführungsform einer erfindungsgemäßen Vorrichtung,
- Fig. 15: einen Schnitt durch eine weitere Ausführungsform eines Klimaelementes.

Die in den Zeichnungen dargestellten Vorrichtungen und Klimaelemente dienen zum Erwärmen und/oder zum Kühlen von Räumen, vorzugsweise von Wohn- oder Büroräumen. Die Vorrichtungen bzw. Klimaelemente können vor Wänden, unterhalb von Decken oder am Boden, beispielsweise auf dem Estrich eines Bodens, oder an einer stehenden Wand befestigt sein.

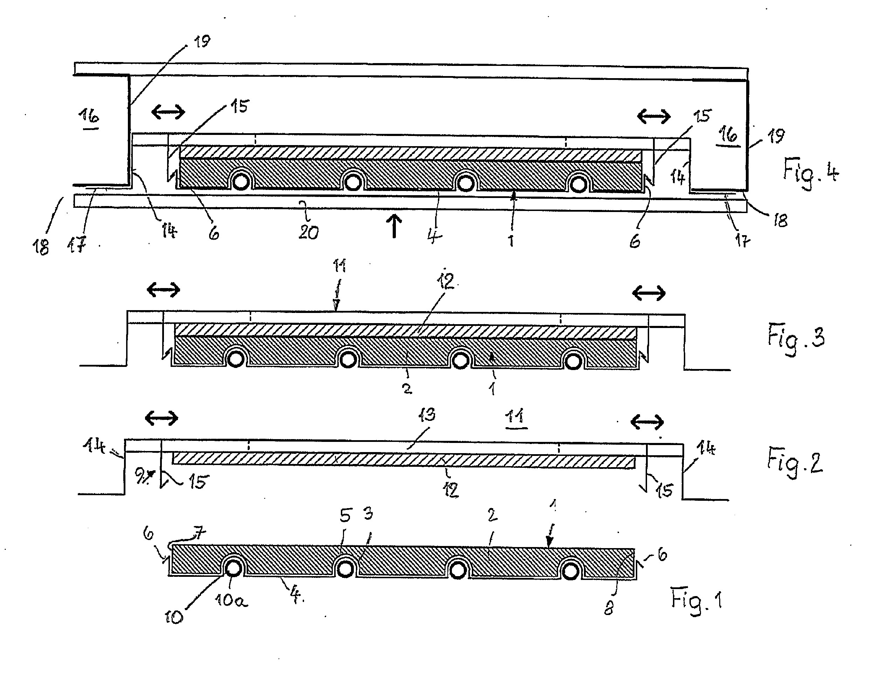

Das Klimaelement hat einen eckigen, vorzugsweise rechteckigen Umriß aufweisenden Isolierkörper 1, der mit einem eckigen, vorzugsweise rechteckigen Umriß aufweisenden Isolierkern 2 versehen ist. An seiner einen Außenseite ist der Isolierkern mit rinnenförmigen Vertiefungen 3 versehen, die vorteilhaft runden Querschnitt haben und vorteilhaft in gleichen Abständen voneinander vorgesehen sind. Die Vertiefungen 3 erstrecken sich über die entsprechende Höhe des Isolierkerns 2. Auf dieser Außenseite des Isolierkerns 2 findet sich ein flächenförmiges Wärmeleitelement 4, das vorteilhaft auf diese Außenseite aufkaschiert ist. Im Bereich der Vertiefungen 3 bedeckt das Wärmeleitelement 4 den Boden 5 der Vertiefungen 3. Das Wärmeleitelement 4 ist beiderseits des Isolierkerns 2 rechtwinklig zu Haken 6 abgewinkelt, die sich unmittelbar benachbart zu den Schmalseiten 7, 8 des Isolierkerns befinden. Die Länge der beiden Haken 6 ist geringer als die Dicke des Isolierkerns 2. Mit den Haken 6 wird der Isolierkörper 1 in eine Aufhängevorrichtung 9 eingehängt (Fig. 2).

In den Vertiefungen 3 befinden sich Rohrabschnitte 10a eines mäanderförmig verlaufenden Rohres 10, in dem ein Wärmeträgermedium strömt. Es ist vorzugsweise Wasser oder Wasserdampf. Das blechförmige Wärmeleitelement 4 besteht aus gut wärmeleitendem Material, wie Kupfer, Stahlblech, Aluminium und dergleichen.

Die Aufhängevorrichtung 9 ist Teil eines Befestigungssatzes 11, der eine weitere Isolierung 12 aufweist. Sie ist streifenförmig ausgebildet und hat vorteilhaft gleiche Breite wie der Isolierkern 2 des Isolierkörpers 1. Die Isolierung 12 ist an Quertraversen 13 befestigt, die an beiden Enden mit ausziehbaren Halteflanschen 14 versehen sind. Sie können in Richtung der Doppelpfeile längs der Quertraversen 13 verschoben werden. Die Aufhängevorrichtung 9 hat Einhängehaken 15, die senkrecht von den Quertraversen 13 abstehen und über die Isolierung 12 vorstehen. Wie Fig. 2 zeigt, liegen die Einhängehaken 15 mit Abstand beiderseits der Isolierung 12.

Bei der Montage der Vorrichtung wird der Isolierkörper 1 mit den Haken 6 in die Einhängehaken 15 des Befestigungssatzes 11 eingehängt (Fig. 3). Der Isolierkern 2 liegt in der eingehängten Lage an der Isolierung 12 des Befestigungssatzes 11 an. Die Isolierung 12 ist wesentlich dünner als der Isolierkern 2, hat jedoch gleiche Grundfläche wie der Isolierkern.

Bei der Montage der Vorrichtung wird zunächst der Befestigungssatz 11, der beispielsweise zwei mit Abstand voneinander liegende Aufhängevorrichtungen 9 hat, zwischen zwei vertikale Ständer 16 eingesetzt, die beispielhaft U-förmigen Querschnitt haben und beispielsweise Teil einer Trockenbauwand sein können. Da die Halteflansche 14 des Befestigungssatzes 11 längs der Quertraversen 13 stufenlos verstellbar sind, können die Halteflansche 14 so eingestellt werden, daß sie genau zwischen die beiden Ständer 16 passen. Die Halteflansche 14 haben einen rechtwinklig nach außen abgewinkelten Schenkel 17, mit dem sie an der Außenseite des einen Schenkels 18 der Ständer 16 anliegen. Die beiden Ständer 16 sind im Ausführungsbeispiel gleichsinnig angeordnet. Dadurch liegt der in Fig. 4 linke Halteflansch 14 nicht nur mit seinem Schenkel 17 an der Außenseite des Schenkels 18 des Ständers 16 an, sondern auch an der Außenseite des Quersteges 19 des linken Ständers 16. Der in Fig. 4 rechte Halteflansch 14 hat Abstand vom Quersteg 19 des Ständers 16 und liegt lediglich mit seinem Schenkel 17 an der Außenseite des Schenkels 18 des Ständers 16 an.

Die Halteflansche 14 können in beliebiger Weise an den Ständern 16 befestigt werden. Anschließend wird der Isolierkörper 1 mit seinen Haken 16 in die Einhängehaken 15 des Befestigungssatzes 11 eingehängt. Anschließend wird eine flächige Wandbeplankung 20 montiert, die sich im Ausführungsbeispiel zwischen den beiden Ständern 16 erstreckt. Im Ausführungsbeispiel erstreckt sich die Wandbeplankung 20 vom freien Ende des Schenkels 18 des in Fig. 4 linken Ständers bis zum Quersteg 19 des in Fig. 4 rechten Ständers 16. Die Wandbeplankung 20 wird an den Schenkeln 18 der Ständer 16 in bekannter Weise befestigt.

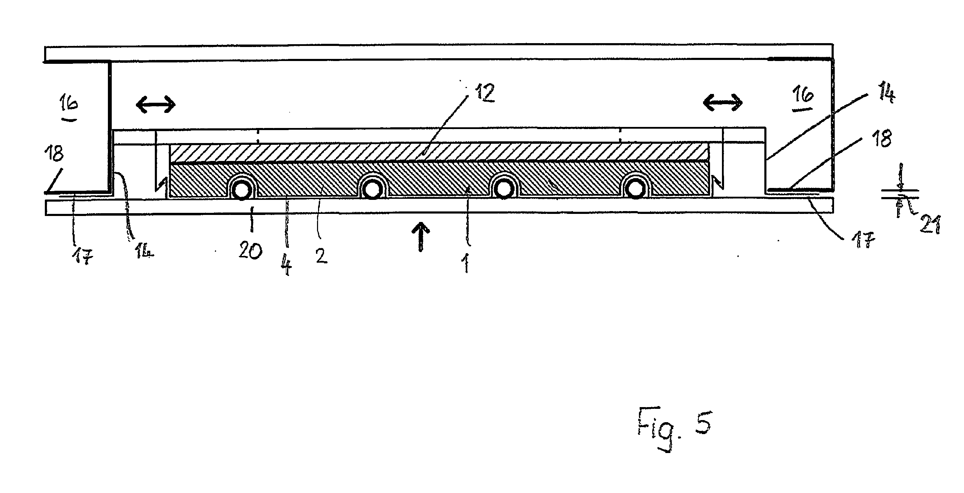

Das Klimaelement ist so beschaffen, daß durch die Wandbeplankung 20 der Isolierkörper 1 in der Einbaulage vorgespannt wird. Bei der Ausführungsform gemäß Fig. 5 wird diese Vorspannung dadurch erreicht, daß die Isolierung aus einem elastisch nachgiebigen Material besteht und der Isolierkörper 1 in seiner Dicke so gestaltet ist, daß er zunächst über die Außenseite der Schenkel 18 der Ständer 16 vorsteht. Wenn die Wandbeplankung 20 aufgesetzt und an den Ständern 16 befestigt wird, wird der überstehende Teil des Isolierkerns 2 des Isolierkörpers 1 unter elastischer Verformung der Isolierung 12 nach innen gedrückt, bis die Wandbeplankung 20 an den Schenkeln 17 der Halteflansche 14 anliegt. Ist die Wandbeplankung 20 an den Ständern 16 befestigt, stellt die elastisch verformte Isolierung 12 sicher, daß das blechförmige Wärmeleitelement 4 des Isolierkörpers 1 flächig an der Innenseite der Wandbeplankung 20 unter Druck anliegt. Der Überstand des Isolierkerns 2 über die Ständerschenkel 18 wird so groß gewählt und die Dicke der elastisch nachgiebigen Isolierung 12 derart vorgesehen, daß nach der Befestigung der Wandbeplankung 20 an den Ständern 16 eine zuverlässige flächige Kontaktierung des Wärmeleitelementes 4 mit der Wandbeplankung 20 sichergestellt ist. In Fig. 5 ist der Überstand des Isolierkerns 2 über die Schenkel 18 des Ständers 16 vor der Befestigung der Wandbeplankung 20 durch das Maß 21 gekennzeichnet.

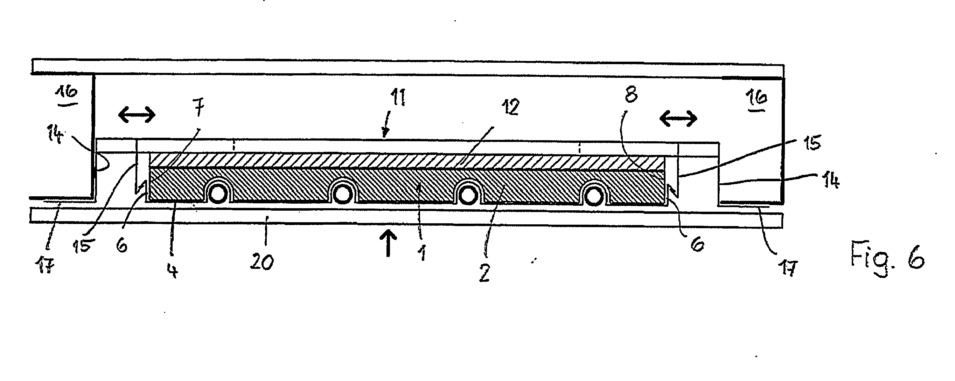

Fig. 6 zeigt eine andere Möglichkeit, wie auf den Isolierkörper 1 eine Vorspannung in Richtung auf die Wandbeplankung 20 ausgeübt werden kann. Die Haken 6 des Isolierkörpers 1 und die Einhängehaken 15 sind so aufeinander abgestimmt, daß bereits nach dem Einhängen des Isolierkörpers 1 in den Befestigungssatz 11 die Isolierung 12 elastisch verformt wird. Die Abstimmung der Länge der Haken 6, 15 ist so, daß das Wärmeleitelement 4 nach dem Einhängen des Isolierkörpers 1 mit seiner Außenseite in Höhe der Außenseite der Schenkel 17 der Halteflansche 14 liegt. Dadurch übt die Wandbeplankung 20 in der Einbaulage keinen Druck auf den Isolierkörper 1 aus. Das Wärmeleitelement 4 liegt flächig an der Innenseite der Wandbeplankung 20 an, wenn diese an dem Ständer 16 befestigt ist.

Bei den beschriebenen Ausführungsformen liegen die Halteflansche 15 mit Abstand zu den Ständern 16. Dadurch haben auch die Schmalseiten 7, 8 des Isolierkerns 2 in der montierten Lage Abstand von den Ständern 16.

Bei den beschriebenen Ausführungsformen ist das Klimaelement Teil einer stehenden Wand. Das Klimaelement kann selbstverständlich auch ein Deckenelement, ein Bodenelement oder auch ein frei stehendes Element sein.

Der Isolierkern 2 besteht bei den beschriebenen und noch zu beschreibenden Ausführungsformen aus einem formstabilen Isolierwerkstoff, vorzugsweise einem entsprechend harten Kunststoff. Dadurch ist gewährleistet, daß der Isolierkern 2 eine ebene Außenseite hat, an der das Wärmeleitelement 4 einwandfrei flächig anliegen kann. Außerdem wird durch die ebene Außenseite gewährleistet, daß das Wärmeleitelement flächig an der Innenseite der Wandbeplankung 20 anliegt.

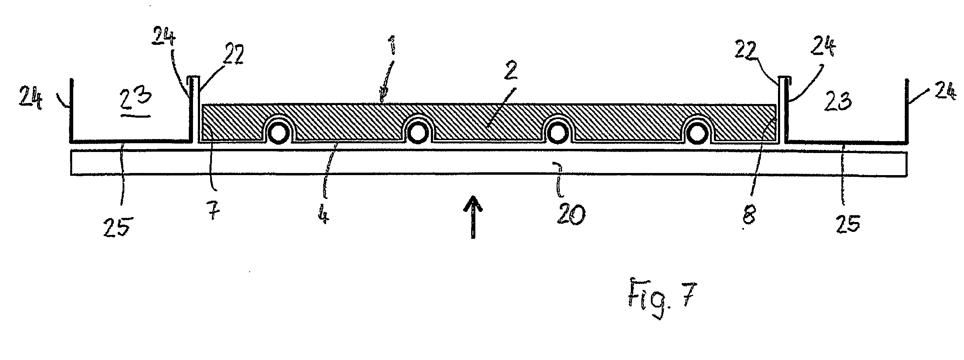

Fig. 7 zeigt ein Klimaelement, das außer seiner Klimafunktion auch als Akustikabsorber wirken kann. Hierzu ist das blechförmige Wärmeleitelement 4 mit Schalldurchlaßöffnungen versehen. Vorzugsweise ist das Wärmeleitelement als Lochblech ausgebildet. Anstelle des über die gesamte Außenseite des Isolierkerns 2 des Isolierkörpers 1 sich erstreckenden Wärmeleitelementes 5 können zur Erzielung der Schalldurchlaßöffnungen auch einzelne Wärmeleitelemente vorgesehen sein, die mit Abstand neben- und/oder übereinander angeordnet sind. Die zwischen den Wärmeleitelementen gebildeten Spalten bilden dann die Schalldurchlaßöffnungen.

Wie bei den vorigen Ausführungsformen ist der über den Isolierkern 2 überstehende Teil des Wärmeleitelementes 4 zu Haken 22 geformt, deren freie Enden U-förmig ausgebildet sind. Im Gegensatz zu den vorigen Ausführungsbeispielen ist die Länge der Haken 22 größer als die Dicke des Isolierkerns 2. Die mit geringem Abstand benachbart zu den Schmalseiten 7, 8 des Isolierkerns 2 liegenden Haken 22 werden in Schienen 23 eingehängt, die im Ausführungsbeispiel horizontal verlaufen und U-förmigen Querschnitt haben. Die Schienen 23 können beispielsweise eine Unterkonstruktion einer Decke sein. Die Schienen 23 sind so eingebaut, daß ihre Schenkel 24 aufwärts verlaufen. Die Haken 22 sind in die einander benachbarten Schenkel 24 der Schienen 23 eingehängt. Die Haken 22 und die Schenkel 24 der Schienen 23 sind so aufeinander abgestimmt, daß in der eingehängten Lage des Isolierkörpers 1 die Außenseite des blechförmigen Wärmeleitelementes 4 mit der Außenseite der horizontal verlaufenden Querstege 25 der Schienen 23 in einer Ebene liegt. Die Wandbeplankung 20 wird an den Querstegen 25 der Schienen 23 befestigt. Die Wandbeplankung bildet im Ausführungsbeispiel eine Deckenbeplankung. Sie erstreckt sich zwischen den voneinander abgewandten Schenkeln 24 der Schienen 23.

Eine solche Ausbildung eines Klimaelementes mit der zusätzlichen Funktion eines akustischen Absorbers kann nicht nur im Deckenbereich, sondern auch im Wandbereich oder im Bodenbereich vorgesehen sein. Der Isolierkörper 1 kann, wie anhand der Fig. 1 bis 6 beschrieben worden ist, mittels einer elastisch verformbaren Isolierung vorgespannt sein. Es ist aber auch möglich, daß auf eine solche Isolierung verzichtet wird. In diesem Falle hat das Klimaelement auch keinen Befestigungssatz, über den der Isolierkörper 1 mit den Schienen 23 verbunden wird.

Der Isolierkern 2 besteht ebenfalls aus einem formstabilen Werkstoff, der eine ebene Außenseite als Anlagefläche für das oder die Wärmeleitelemente 4 aufweist. Der Isolierkern 2 kann beispielhaft auch aus Brandschutzmaterial bestehen, so daß das Klimaelement zusätzlich als Brandschutzelement in Räumen eingesetzt werden kann.

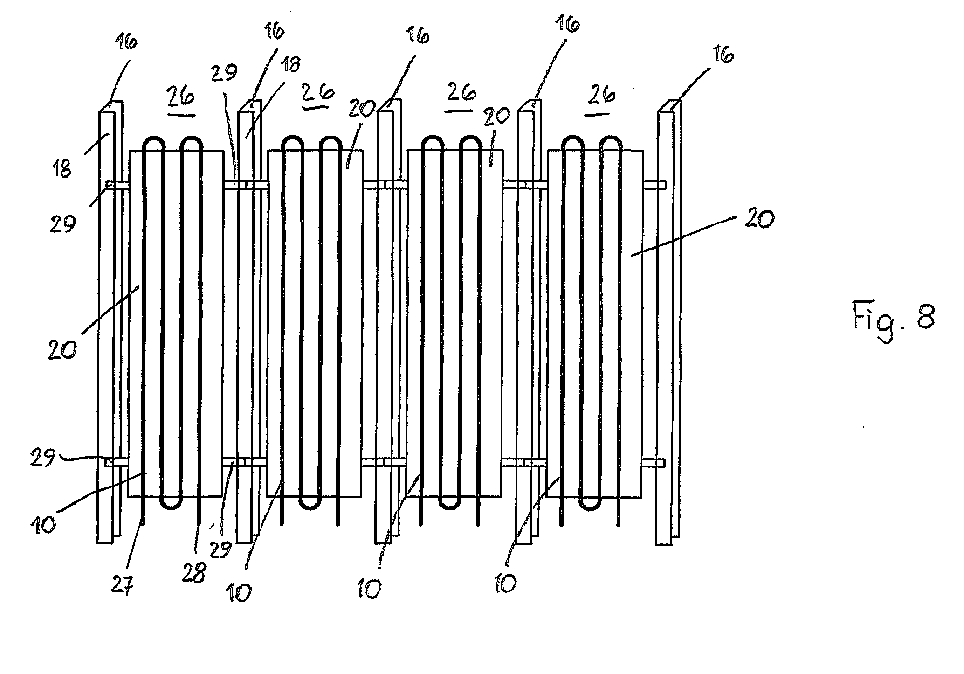

Fig. 8 zeigt beispielhaft und vereinfacht mehrere Klimaelemente 26, die jeweils gleich ausgebildet und zwischen zwei vertikalen Ständern 16 eingebaut sind. Die Klimaelemente 26 haben jeweils das mäanderförmig verlaufende Rohr 10 mit einem Zulaufstutzen 27 und einem Ablaufstutzen 28 für das Wärmeleitmedium. Im Beispielsfall liegen die beiden Stutzen 27, 28 am unteren Rand des Klimaelementes 26 und stehen über die Wandbeplankung 20 nach unten vor. Die Ständer 16 überragen die Klimaelemente 26 nach oben und unten. Im Unterschied zu den vorigen Ausführungsbeispielen erstreckt sich die Wandbeplankung nicht bis über die Ständer 16, sondern hat Abstand von ihnen. Dafür ist die Wandbeplankung 20 und damit das gesamte Klimagerät 26 über Querlaschen 29 an den Schenkeln 18 der Ständer 16 befestigt.

Wie sich aus Fig. 8 ergibt, lassen sich die Klimaelemente 26 problemlos an den Ständern 16 befestigen. Die Klimaelemente können entsprechend den vorhergehenden Ausführungsformen ausgebildet sein.

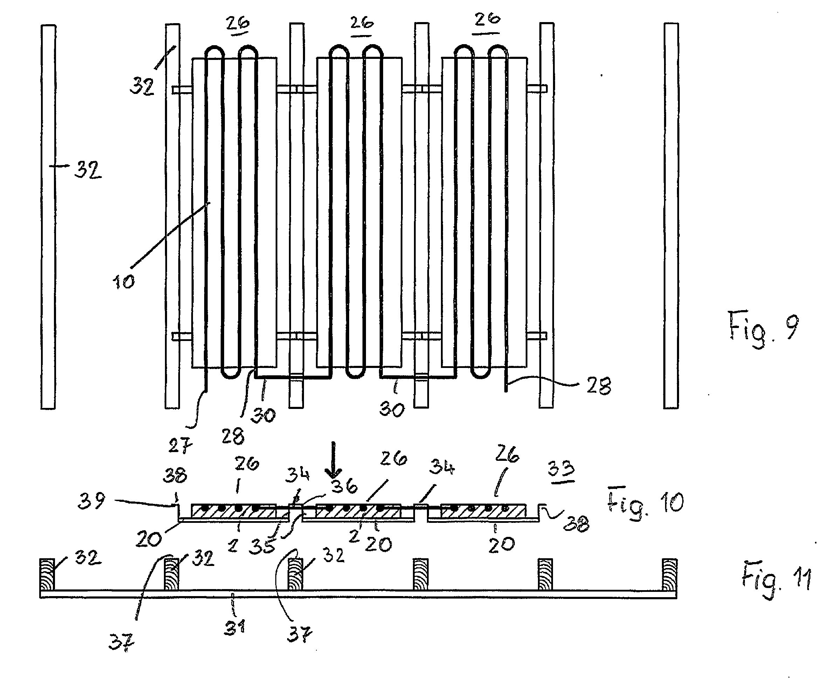

Fig. 9 zeigt einzelne Klimaelemente 26, die nebeneinander angeordnet und im Unterschied zur Ausführungsform gemäß Fig. 8 miteinander leitungsverbunden sind. In diesem Falle sind benachbarte Zulauf- und Ablaufstutzen 27 durch ein Verbindungsrohr 30 miteinander verbunden. Darum ist für die Zuführung des Wärmeleitmediums nur der eine Zulaufstutzen 27 und der eine Ablaufstutzen 28 erforderlich, die an die entsprechenden Zu- und Ablaufleitungen angeschlossen werden müssen. Im übrigen sind die Klimaelemente 26 gleich ausgebildet wie bei der Ausführungsform gemäß Fig. 8. Die Klimaelemente 26 werden im Ausführungsbeispiel an einer liegenden Wand, beispielsweise in der Fertighausindustrie, als vorgefertigte, vorverrohrte Baugruppe 33 verwendet. Die miteinander verbundenen Klimaelemente 26 werden an einer Wandbeplankung 31 (Fig. 11) befestigt, die an ihrer Innenseite mit Abstand voneinander liegende Stützen 32 aufweist. Sie haben rechteckigen Querschnitt und sind im dargestellten Ausführungsbeispiel aus Holz gefertigt. Sie stehen quer von der Innenseite der Wandbeplankung 31 ab.

Die aus den Klimaelementen 26 gebildete Baugruppe 33 (Fig. 10) weist zwischen benachbarten Klimaelementen 26 U-förmige Bügel 34 auf, deren Breite der Dicke der Stützen 32 entspricht. Die Schenkel 35 der Bügel 34 schließen an die einander benachbarten Längsränder der Wandbeplankungen 20 der Klimaelemente 26 an. Die Baugruppe 33 wird auf die Stützen 32 aufgesetzt, wobei die Bügelschenkel 35 an den Seitenflächen der Stützen 32 anliegen, während der Bügelsteg 36 auf den Stirnseiten 37 der Stützen 32 aufliegt. Die Breite der Wandbeplankungen 20 ist so gewählt, daß sie zwischen benachbarte Stützen 32 eingesetzt werden können. An den endseitigen Klimaelementen 26 ist anstelle des U-förmigen Bügels ein L-förmiges Winkelstück 38 vorgesehen, das mit seinem abgewinkelten Schenkel 39 auf der Stirnseite 37 der zugeordneten Stütze 32 aufliegt. Auch die Winkelstücke 38 sind an den Längsseiten der endseitigen Wandbeplankungen 20 vorgesehen. Über die Länge der Wandbeplankungen 20 sind die Bügel 34 und die Winkelstücke 38 verteilt angeordnet. Die Bügelstege 30 sowie die Schenkel 39 der Winkelstücke 38 liegen in einer Ebene mit der die Vertiefungen für die Rohre 10 enthaltenden Außenseite. Sobald die Baugruppe 33 auf die Wandbeplankung 31 aufgesetzt worden ist, wird auf die andere Seite der Baugruppe 33 die Wandbeplankung 20 aufgesetzt, wie anhand der Fig. 1 bis 6 erläutert worden ist. Die Wandbeplankung 20 ist in den Fig. 9 bis 11 nicht dargestellt. Nach dem Aufsetzen dieser Wandbeplankung steht der Isolierkern 2 der Klimaelemente 26 unter Vorspannung.

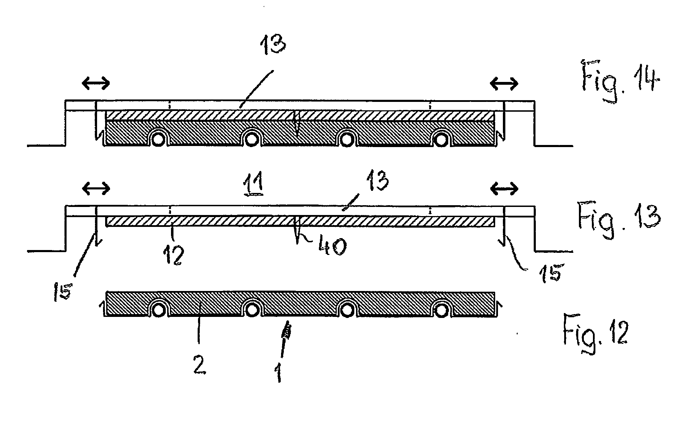

Die Fig. 12 bis 14 zeigen die Möglichkeit, an den Quertraversen 13 des Befestigungssatzes 11 durch die elastisch nachgiebige Isolierung 12 ragende Dorne 40 vorzusehen, die einer Spitze enden. Diese Dorne 40 dringen, wenn der Isolierkörper 1 in die Einhängehaken 15 des Befestigungssatzes 11 eingehängt wird, in den Isolierkern 2 ein. Die Dorne 40 bilden dann eine Verschiebesicherung für den Isolierkörper 1, insbesondere wenn das Klimaelement 26 in einer senkrechten Lage eingebaut wird. Grundsätzlich reicht für diese Lagesicherung ein einziger Dorn 40 aus. Vorteilhaft ist es jedoch, mehrere solcher Dorne zu verwenden. Im übrigen kann das Klimaelement entsprechend den zuvor beschriebenen Ausführungsformen ausgebildet sein.

Die Isolierung 12 kann an ihrer dem Isolierkern 2 zugewandten Seite wenigstens teilweise mit einer (nicht dargestellten) Klebeschicht versehen sein, über die in montierter Lage die Isolierung 12 und der Isolierkern 2 miteinander verbunden sind. Die Klebeschicht kann zusätzlich zum Dorn 40 oder anstelle des Dorns 40 vorgesehen sein.

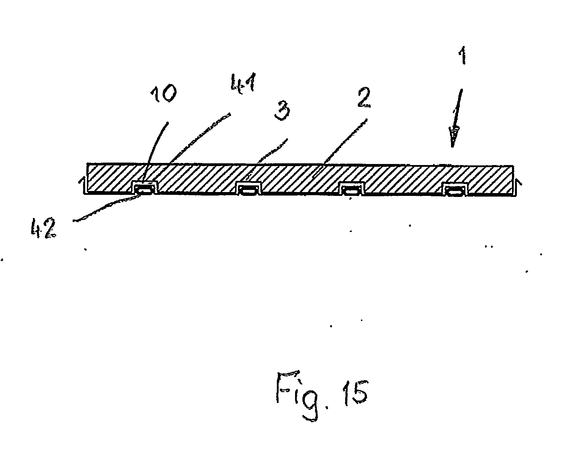

Fig. 15 schließlich zeigt die Möglichkeit, daß die Rohre 10 nicht nur kreisförmigen Querschnitt haben können. Im dargestellten Ausführungsbeispiel sind die Rohre 10 flachgedrückt, wodurch sie ebene Rohrflächen 41, 42 aufweisen. Auch die Vertiefungen 3 im Isolierkern 2 des Isolierkörpers 1 haben dementsprechend eckigen Querschnitt. Aufgrund der ebenen Rohrflächen 42 ergibt sich eine großflächige Anlage des Rohres 10 an der Wandbeplankung 20. Dadurch erhöht sich die Wärme/Kälteübertragung im Vergleich zu einem Rohr mit rundem Querschnitt erheblich. Ein solches flach gedrücktes Rohr 10 kann bei den zuvor beschriebenen Ausführungsbeispielen eingesetzt werden.

## Patentansprüche

1. Vorrichtung zum Klimatisieren von Räumen und Gebäuden, mit mindestens einem Klimaelement, das mit wenigstens einem Isolierkörper versehen ist, der wenigstens eine Leitung für ein Wärmeträgermedium sowie wenigstens ein Wärmeleitelement aufweist, das an mindestens einer Raumfläche anliegt,
**dadurch gekennzeichnet, dass** der Isolierkörper (1) gegen die Raumfläche (20) vorgespannt ist.

2. Vorrichtung nach Anspruch 1,
**dadurch gekennzeichnet, dass** die Vorspannung durch wenigstens ein elastisch verformbares Element (12) erzeugt wird, das vorteilhaft eine Isolierung ist.

3. Vorrichtung nach Anspruch 2,
**dadurch gekennzeichnet, dass** das elastisch verformbare Element (12) durch wenigstens eine Quertraverse (13) abgestützt ist.

4. Vorrichtung nach einem der Ansprüche 1 bis 3,
**dadurch gekennzeichnet, dass** der Isolierkörper (1) Haken (6) aufweist, mit denen er in Einhängehaken (15) der Vorrichtung eingehängt ist.

5. Vorrichtung nach einem der Ansprüche 1 bis 4,
**dadurch gekennzeichnet, dass** bei der Befestigung der Raumfläche (20) der Isolierkörper (1) unter elastischer Verformung des Elementes (12) zurückgeschoben wird,

6. Vorrichtung nach Anspruch 4,
**dadurch gekennzeichnet, dass** die Haken (6) und die Einhängehaken (15) so aufeinander abgestimmt sind, daß das elastisch verformbare Element (12) beim Einhängen des Isolierkörpers (1) elastisch verformt wird.

7. Vorrichtung, insbesondere nach einem der Ansprüche 1 bis 6,
**dadurch gekennzeichnet, dass** das Wärmeleitelement (4) mit Schalldurchtrittsöffnungen versehen ist.

8. Vorrichtung nach Anspruch 7,
**dadurch gekennzeichnet, dass** das Wärmeleitelement (4) durch ein Lochblech gebildet ist.

9. Vorrichtung nach Anspruch 7,
**dadurch gekennzeichnet, dass** mehrere Wärmeleitelemente (4) unter Bildung der Schalldurchtrittsöffnungen mit Abstand neben- und/oder hintereinander angeordnet sind.

10. Vorrichtung nach einem der Ansprüche 1 bis 9,
**dadurch gekennzeichnet, dass** der Isolierkörper (1) mindestens einen formstabilen Isolierkern (2) aufweist.

11. Vorrichtung nach einem der Ansprüche 1 bis 10,
**dadurch gekennzeichnet, dass** das Wärmeleitelement (4) dem Isolierkörper (1) die notwendige Formstabilität verleiht.

12. Vorrichtung, insbesondere nach einem der Ansprüche 1 bis 11,
**dadurch gekennzeichnet, dass** mehrere Klimaelemente (26) zu einer vormontierten Baueinheit (33) zusammengefaßt sind.

13. Vorrichtung nach Anspruch 12,
**dadurch gekennzeichnet, dass** die Leitungen (10) benachbarter Klimaelemente (26) in der Baueinheit (33) miteinander leitungsverbunden sind.

14. Vorrichtung nach Anspruch 12 oder 13,
**dadurch gekennzeichnet, dass** benachbarte Klimaelemente (26) durch Verbindungsstücke (34), vorzugsweise U-förmige Bügel, miteinander verbunden sind.

15. Vorrichtung nach einem der Ansprüche 1 bis 14,
**dadurch gekennzeichnet, dass** der Isolierkörper (1) in aufrechter Lage durch wenigstens ein, vorteilhaft als spitz zulaufender Dorn ausgebildetes Sicherungselement (40) lagegesichert ist, das vorzugsweise von der Quertraverse des Klimaelementes (26) absteht.

16. Vorrichtung nach einem der Ansprüche 1 bis 16,
**dadurch gekennzeichnet, dass** der Isolierkörper (1) durch eine Klebeschicht mit dem elastisch verformbaren Element (12) verbunden ist, die sich vorteilhaft über die gesamte Fläche des elastisch verformbaren Elementes (12) erstreckt.
